Europäisches Patentamt

European Patent Office

Office européen des brevets

(19)

(11) Veröffentlichungsnummer : **0 208 839**
**B1**

(12) **EUROPÄISCHE PATENTSCHRIFT**

(45) Veröffentlichungstag der Patentschrift :
02.11.89

(21) Anmeldenummer : 86104179.6

(22) Anmeldetag : 26.03.86

(51) Int. Cl.⁴ : **F 16 J 15/56, F 16 J 15/32**

(54) Lagerbuchse.

(30) Priorität : 20.06.85 DE 3522011

(43) Veröffentlichungstag der Anmeldung :
21.01.87 Patentblatt 87/04

(45) Bekanntmachung des Hinweises auf die Patenterteilung : 02.11.89 Patentblatt 89/44

(84) Benannte Vertragsstaaten :
AT CH DE FR GB IT LI NL SE

(56) Entgegenhaltungen :
FR–A– 1 477 198
FR–A– 2 149 176
FR–E– 71 821
GB–A– 1 104 603
US–A– 3 076 683
US–A– 3 467 395

(73) Patentinhaber : WABCO Westinghouse Steuerungstechnik GmbH & Co.
Bartweg 13 Postfach 91 12 70
D-3000 Hannover 91 (DE)

(72) Erfinder : Alt, Eckard
Leharweg 5
D-3000 Hannover 91 (DE)
Erfinder : Brausfeld, Walter
Hannoversche Strasse 101
D-3000 Hannover 61 (DE)
Erfinder : Kröger, Dirk
Ostlandweg 19
D-3014 Laatzen 1 (DE)
Erfinder : Kruppa, Hans
Am Untergut 6 A
D-3013 Barsinghausen (DE)
Erfinder : Liesenhoff, Thomas
Kommandanturstrasse 12
D-3000 Hannover (DE)
Erfinder : Möller, Rudolf
Knülweg 15 e
D-3007 Gehrden 1 (DE)
Erfinder : Staske, Reiner
Klabundestrasse 32
D-3000 Hannover 1 (DE)
Erfinder : Völz, Erhard
Wülferoder Strasse 22
D-3014 Laatzen 1 (DE)

(74) Vertreter : Schrödter, Manfred
WABCO Westinghouse Fahrzeugbremsen GmbH Am
Lindener Hafen 21 Postfach 91 12 80
D-3000 Hannover 91 (DE)

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft eine Lagerbuchse mit Dicht- und/oder Führungs- und/oder Abstreifringen oder ähnlichen Ringen, für einen stangenförmigen Körper, gemäß dem Oberbegriff des Patentanspruchs 1.

Aus der FR-E-71 821 ist eine Lagerbuchse für einen stangenförmigen Körper bekannt. Die Lagerbuchse weist in ihrer äußeren Mantelfläche eine umlaufende Vertiefung auf, in welche der eine Ausnehmung in einer Gehäusewand begrenzende Randbereich eingreift, so daß die Lagerbuchse in axialer Richtung gesichert ist. An ihrem der Gehäusewand abgewandten freien Ende besitzt die Lagerbuchse einen sich auf den stangenförmigen Körper zu erstreckenden, ringartigen Vorsprung, der dichtend an der äußeren Mantelfläche des stangenförmigen Körpers anliegt.

Von Nachteil ist bei dieser bekannten Lagerbuchse, daß nicht verschiedene Ringe, wie Dichtringe und Abstreifringe, vorgesehen werden und somit auch nicht ausgetauscht werden können.

Es ist auch nicht möglich, diese Lagerbuchse vollständig in die Öffnung eines Gehäuses eintauchen zu lassen, besonders dann, wenn die Öffnung von einem rohrförmigen Körper an oder in einem Gehäuse gebildet wird.

Der Erfindung liegt deshalb die Aufgabe zugrunde, eine Lagerbuchse der eingangs erwähnten Art derart zu verbessern, daß eine einfache Montage von Dicht-, Abstreif- oder ähnlichen Ringen in der Lagerbuchse sowie eine einfache Montage der Lagerbuchse in einer Gehäuseöffnung ermöglicht werden.

Diese Aufgabe wird mit der im Patentanspruch 1 angegebenen Erfindung gelöst. Weiterbildungen und vorteilhafte Ausgestaltungen der Erfindung sind in den Unteransprüchen angegeben.

Die Erfindung bietet insbesondere den Vorteil, ohne Zuhilfenahme von Werkzeugen die in der Lagerbuchse anzuordnenden Dicht-, Führungs- oder/und Abstreifringe einzeln austauschen zu können. Auch die Montage der Lagerbuchse in der Gehäuseöffnung kann ohne Verwendung von Werkzeugen erfolgen. Zur Sicherung der Lagerbuchse gegen axiale Bewegung sind an der Lagerbuchse Haltemittel vorgesehen.

Gemäß einer vorteilhaften Ausgestaltung der Erfindung bestehen die Haltemittel aus an der Lagerbuchse vorgesehenen Vorsprüngen, die so zueinander angeordnet sind, daß sie bei der Montage der Lagerbuchse in der Gehäuseöffnung an den einander abgewandten Stirnflächen der als Stufenbohrung ausgebildeten Gehäuseöffnung zur Anlage kommen, wobei die Vorsprünge auf der dem Gehäuseinnenraum zugewandten Seite der Lagerbuchse mit einem entsprechenden Vorsprung des Gehäuses nach Art einer Schnappverbindung zusammenwirken. Es ist nicht mehr erforderlich, zur Fixierung der Lagerbuchse in der Gehäuseöffnung, eine Nut in die die Gehäuseöffnung begrenzende Wandung einzuarbeiten und die Lagerbuchse mittels eines Sicherungsringes zu sichern.

Anhand der Zeichnung wird nachstehend ein Ausführungsbeispiel der Erfindung näher erläutert.

Es zeigen :

Fig. 1 den Deckel eines Arbeitszylinders mit einer abgestuften Öffnung zum Durchführen einer Kolbenstange, wobei in der Öffnung eine mit Dichtringen ausgestattete Lagerbuchse für die Kolbenstange angeordnet ist und

Fig. 2 eine Lagerbuchse mit einem konisch ausgebildeten Endbereich, welcher in Längsrichtung verlaufende Schlitze sowie an seiner Innenseite eine in Umfangsrichtung verlaufende Nut zur Aufnahme eines Dichtringes aufweist.

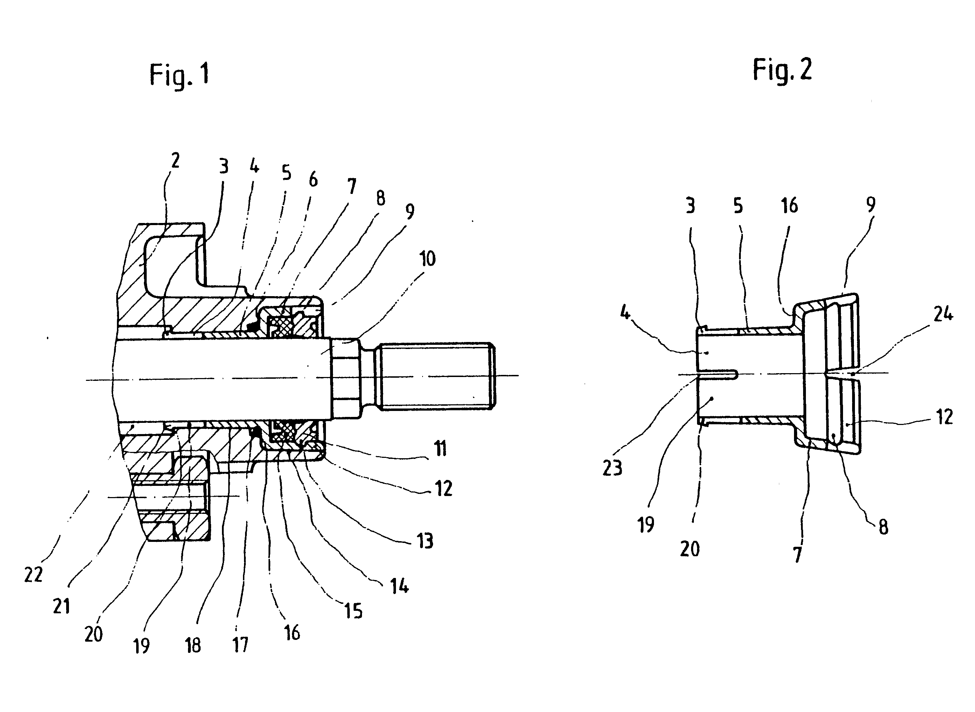

In Fig. 1 ist ein Deckel 2 eines Arbeitszylinders, in welchem ein mit einer Kobenstange 10 verbundener Kolben abgedichtet verschiebbar angeordnet ist, dargestellt.

Der Deckel 2 weist eine in Längsrichtung verlaufende, als Stufenbohrung 14, 18, 20 ausgebildete Öffnung auf, durch welche die Kolbenstange 10 aus dem Zylinder herausgeführt ist. In der Stufenbohrung 14, 18, 20 ist eine Lagerbuchse für die Kolbenstange 10 angeordnet.

Die Lagerbuchse ist aus einem elastisch verformbaren Material, wie z. B. Kunststoff, gefertigt und weist ein im wesentlichen zylinderisch ausgebildetes erstes Teilstück 5 sowie ein an dieses anschließendes, sich konisch erweiterndes zweites Teilstück 7 auf. Der kleinste Durchmesser des zweiten Teilstückes 7 ist größer als der Durchmesser des ersten Teilstückes 5, wodurch an der Übergangsstelle vom ersten Teilstück 5 zum zweiten Teilstück 7 eine Schulter 16 gebildet wird. Das zweite Teilstück 7 weist in Längsrichtung verlaufende Schlitze 24 auf, wodurch federnde Abschnitte 9, 12 gebildet werden. Bei Einführen der Lagerbuchse 5, 7 in die Stufenbohrung 14, 18, 20 wird das Teilstück 7 in der Weise elastisch verformt, daß es die Form des abgestuften Teiles 14 der Stufenbohrung 14, 18, 20 annimmt. Das erste Teilstück 5 ist ebenfalls mit in Längsrichtung verlaufenden Schlitzen versehen, wodurch federnde Abschnitte 4, 19 gebildet werden. An den freien Enden der federnden Abschnitte 4, 19 sind nach außen gerichtete Vorsprünge 3, 21 vorgesehen, die bei der Montage der Lagerbuchse 7, 5 mit der dem Zylinderinnenraum 22 zugewandten Fläche der Abstufung 20 der Stufenbohrung 14, 18, 20 eine Schnappverbindung eingehen. Mit der Schulter 16 liegt die Lagerbuchse 5, 7 an der dem Zylinderinnenraum 22 abgewandten Fläche der Stufe 6 der Stufenbohrung 14, 18, 20 an. Durch diese vorgenannten Maßnahmen wird eine Bewegung der Lagerbuchse 5, 7 in Richtung ihrer Längsachse verhindert.

Zwischen der Wandung der Stufenbohrung 14, 18, 20 und der Lagerbuchse 5, 7 ist im Bereich der Schulter 16 der Lagerbuchse 5, 7 ein Dichtring 17 angeordnet.

Die Lagerbuchse 5, 7 weist auf ihrer der Kolbenstange 10 zugewandten Seite in dem mit Längsschlitzen versehenen Bereich des zweiten Teilstückes 7 eine umlaufende Nut 8 zur Aufnahme der äußeren Wulst 13 eines Abstreifringes 11 auf. Ein als Kolbenstangedichtung dienender Dichtring 15 ist zwischen dem Abstreifring 11 und der Schulter 16 der Lagerbuchse 5, 7 in der Lagerbuchse 5, 7 angeordnet.

In Fig. 2 ist die Lagerbuchse für sich alleine noch einmal dargestellt. Der besseren Übersicht halber sind die den bereits in Fig. 1 gezeigten Teilen der Lagerbuchse gleichen Teile mit gleichen Bezugszeichen versehen.

Wie bereits im vorstehenden erwähnt, besteht die Lagerbuchse aus einem zylinderisch ausgebildeten ersten Teilstück 5 und einem daran anschließenden sich nach außen konisch erweiternden zweiten Teilstück 7. Das erste Teilstück 5 und das zweite Teilstück 7 sind über einen als Schulter 16 ausgebildeten, sich radial nach außen erstreckenden umlaufenden Vorsprung des ersten Teilstückes 5 miteinander verbunden. Das erste Teilstück 5 weist in seinem freien Endbereich in Richtung seiner Längsachse verlaufende Schlitze 23 auf, durch welche der Endbereich in federnde Abschnitte 4, 19 unterteilt wird. Die federnden Abschnitte 4, 19 besitzen an ihrem Ende je einen sich nach außen erstreckenden nasenartigen Vorsprung 3, 21. In gleicher Weise ist der freie Endbereich des zweiten Teilstückes 7 durch die Anordnung von in Längsrichtung der Lagerbuchse verlaufenden Schlitzen 24 in federnde Abschnitte 9, 12 unterteilt.

In dem diese federnden Abschnitte 9, 12 bildenden Endbereich ist auf der Innenseite des konischen Teilstückes 7 eine umlaufende Nut 8 vorgesehen, in welcher der in Fig. 1 gezeigte Abstreifring 11 Halt findet.

Die Montage der Lagerbuchse 5, 7 erfolgt in der Weise, daß die Lagerbuchse 5, 7 mit ihrem zylindrischen Teilstück 5 in die Stufenbohrung 14, 18, 20 eingeführt wird, und zwar soweit, bis die als Anschlag dienende Schulter 16 an der Fläche 6 der Stufenbohrung 14, 18, 20 zur Anlage kommt und die ebenfalls als Anschlag dienenden nasenartigen Vorsprünge 3, 21 die Abstufung 20 hintergreifen und an der der Fläche 6 abgewandten Fläche der Abstufung 20 zur Anlage kommen. Während des Einführvorganges werden die federnden Abschnitte 4, 19 des zylindrischen Teilstückes 5 der Lagerbuchse 5, 7 im Sinne einer Durchmesserverringerung dieses Lagerbuchsenendbereiches elastisch verformt. Das konische Teilstück 7 der Lagerbuchse 5, 7 wird beim Eintauchen in den Teil 14 der Stufenbohrung 14, 18, 20 zunehmend elastisch verformt, und zwar soweit, bis es bei zur Anlage kommen der Schulter 16 an der quer zur Längsachse der Stufenbohrung verlaufenden Fläche 6 der Stufenbohrung 14, 18, 20 die Form des abgestuften Teils 14 der Stufenbohrung 14, 18, 20 angenommen hat. Der Dichtring 15 und der Abstreifring 11 werden in die Lagerbuchse 5, 7 eingesetzt, wenn das konische Teilstück 7 der Lagerbuchse 5, 7 beim Einführen in die Stufenbohrung 14, 18, 20 seine endgültige Form noch nicht erreicht hat, wobei der Abstreifring 11 mit seiner umlaufenden Wulst 13 in die Nut 8 einschnappt.

Beim Zusammenfügen von Zylinder und Zylinderdeckel 2 wird die Kolbenstange 10 durch die Lagerbuchse 5, 7 hindurchgeführt. Die Lagerbuchse 5, 7 wird durch die Kolbenstange 10, den Abstreifring 11 sowie den Dichtring 15 und die nasenartigen Vorsprünge 3, 21 daran gehindert, ihre Lage in der Stufenbohrung 14, 18, 20 zu verändern. Zwecks Demontage der Lagerbuchse 5, 7 ist der Zylinderdeckel 2 vom Zylinder 1 zu lösen und die Kolbenstange 10 aus der Lagerbuchse 5, 7 herauszuziehen. Unter elastischer Verformung der mit den nasenartigen Vorsprüngen 3, 21 versehenen Abschnitte 4, 19 des zylindrischen Teilstückes 5 kann die Lagerbuchse 5, 7 nun aus der Stufenbohrung 14, 18, 20 herausgedrückt werden.

Es ist natürlich auch möglich, die nasenartigen Vorsprünge auf dem Umfang des konischen Teilstückes 7 der Lagerbuchse 5, 7 anzuordnen und in der die Stufenbohrung 14, 18, 20 begrenzenden Wandung entsprechende radial verlaufende Bohrungen vorzusehen, in welche die nasenartigen Vorsprünge der Lagerbuchse 5, 7 bei der Montage einrasten. Bei einer solchen Ausführungsform können die nasenartigen Vorsprünge mit Hilfe eines Stiftes unter elastischer Verformung der federden Abschnitte 12 sowie unter elastischer Verformung des Abstreifringes 11 aus der Bohrung herausgedrückt und die Lagerbuchse 5, 7 aus der Stufenbohrung 14, 18, 20 herausgezogen werden, ohne daß der Zylinderdeckel 2 gelöst und von der Kolbenstange 10 gezogen werden muß.

Werden am freien Endbereich der federd ausgebildeten Abschnitte 9, 12 des zweiten Teilstückes 7 der Lagerbuchse 5, 7 sich radial nach innen erstreckende Vorsprünge vorgesehen, welche im Zusammenwirken mit der Schulter 16 eine Bewegung der Dicht- und Abstreifringe in Richtung der Längsachse der Lagerbuchse 5, 7 verhindern, so kann auf die Anordnung einer Nut in diesem Teilstück verzichtet werden.

Es ist selbstverständlich auch möglich, die Lagerbuchse außer aus Kunststoff auch aus anderen elastisch verformbaren Materialien herzustellen. Denkbar ist es auch die Lagerbuchse mehrteilig auszubilden, wobei in einem solchen Fall lediglich der die Dicht- und Abstreifringe aufnehmende Bereich sowie der die Haltemittel aufweisende Bereich aus einem elastisch verformbaren Material bestehen müssen.

Die beiden Teilstücke der Lagerbuchse können in ihrem freien Endbereich sowohl einen als auch mehrere in Längsrichtung verlaufende Schlitze aufweisen. Es ist auch denkbar, dem zweiten Teilstück anstatt einer konischen Form eine andersartige Form zu geben, die nach dem Einführen der Lagerbuchse in die Gehäuseausnehmung einen Halt für die Dicht- oder auch Abstreifringe bietet.

Die beschriebene Lagerbuchse ist sowohl zur abgedichteten Durchführung einer in axialer Richtung bewegbaren Stange als auch zur Lagerung einer Welle geeignet, die aus einem ein gasförmiges oder flüssiges Medium einschließenden Gehäuse herausgeführt ist.

Die Haltemittel für die Lagerbuchse können auch aus am freien Endbereich des ersten Teilstückes angeordneten, sich nach außen erstreckenden Vorsprüngen bestehen, die mit entsprechenden Ausnehmungen und Vorsprüngen im Gehäuse bzw. in der die Öffnung des Gehäuses begrenzenden Wandung nach Art eines Bajonettverschlusses zusammenwirken.

In einem solchen Fall wird das erste Teilstück nicht mit in Längsrichtung verlaufenden Schlitzen versehen.

## Patentansprüche

1. Lagerbuchse mit Dicht- und/oder Führungs- und/oder Abstreifringen oder ähnlichen Ringen (11, 15), für einen stangenförmigen Körper (10), welche in einer zum Durchführen des stangenförmigen Körpers (10) versehenen Öffnung (14, 18, 20) eines Gehäuses (2) lösbar angeordnet ist, insbesondere für die Kolbenstange eines Arbeitszylinders, mit folgenden Merkmalen :

a) Die Lagerbuchse besteht aus einem im wesentlichen zylindrisch ausgebildeten ersten Teilstück (5) und einem sich daran anschließenden sich erweiternden zweiten Teilstück (7) ;

b) die Lagerbuchse besteht wenigstens in dem das zweite Teilstück (7) bildenden Bereich aus einem elastisch verformbaren Material ;

c) die Lagerbuchse weist Haltemittel (4, 19, 3, 21) auf, die so ausgebildet sind, daß sie die Lagerbuchse nach dem Einführen in die Öffnung (14, 18, 20) des Gehäuses (2) gegen axiales Verschieben sichern ;
gekennzeichnet durch die folgenden Merkmale :

d) das zweite Teilstück (7) dient zur Aufnahme des Dicht- und/oder Führungs- und/oder Abstreifringes (11, 15) oder eines ähnlichen Ringes ;

e) das zweite Teilstück (7) weist wenigstens einen in Längsrichtung der Lagerbuchse verlaufenden Schlitz (24) auf ;

f) das zweite Teilstück (7) ist konisch ausgebildet ;

g) der kleinste Durchmesser des zweiten Teilstückes (7) ist größer als der Durchmesser des ersten Teilstückes (5).

2. Lagerbuchse nach Anspruch 1, gekennzeichnet durch die folgenden Merkmale :

a) das erste Teilstück (5) weist wenigstens einen in Längsrichtung verlaufenden Schlitz (23) auf ;

b) an dem freien Ende des ersten Teilstückes (5) ist ein sich radial nach außen erstreckender Vorsprung (3, 21) vorgesehen, der als Haltemittel für die Lagerbuchse in der Öffnung des Gehäuses dient.

3. Lagerbuchse nach wenigstens einem der vorhergehenden. Ansprüche, gekennzeichnet durch die folgenden Merkmale :

a) das erste Teilstück (5) weist mehrere in Längsrichtung verlaufende Schlitze (23) auf, die so bemessen sind, daß wenigstens der freie Endbereich des ersten Teilstückes (5) in federnde Abschnitte (4, 19) unterteilt ist ;

b) das zweite Teilstück (7) weist mehrere in Längsrichtung verlaufende Schlitze (24) auf, die so bemessen sind, das wenigstens der freie Endbereich des zweiten Teilstückes (7) in federnde Abschnitte (9, 12) unterteilt ist.

4. Lagerbuchse nach wenigstens einem der vorhergehenden Ansprüche, dadurch gekennzeichnet, daß im Bereich der federnden Abschnitte (9, 12) auf der Innenseite des zweiten Teilstückes (7) eine Nut (8) zur Aufnahme von Dicht- und/oder Führungs- und/oder Abstreifringen oder ähnlichen Ringen angeordnet ist.

5. Lagerbuchse nach wenigstens einem der vorhergehenden Ansprüche, gekennzeichnet durch die folgenden Merkmale :

a) der an dem freien Endbereich des ersten Teilstückes (5) angeordnete Vorsprung (3, 21) dient als erster Anschlag ;

b) ein zweiter Anschlag wird von einer das erste Teilstück (5) mit dem zweiten Teilstück (7) verbindenden, nach Art einer Schulter (16) ausgebildeten, nach außen gerichteten Vorsprung des ersten Teilstückes (5) gebildet ;

c) der erste Anschlag (3, 21) und der zweite Anschlag (16) sind so zueinander angeordnet, daß sie bei der Montage der Lagerbuchse in der Öffnung des Gehäuses an den einander abgewandten Flächen von im Gehäuse vorgesehenen Abstufungen zur Anlage kommen.

6. Lagerbuchse nach wenigstens einem der vorhergehenden Ansprüche, dadurch gekennzeichnet, daß die mit den Vorsprüngen (3, 21) versehenen federnden Abschnitte (4, 19) des ersten Teilstückes (5) mit einer Abstufung (20) der die Lagerbuchse aufnehmenden Öffnung des Gehäuses nach Art einer Schnappverbindung zusammenwirken.

7. Lagerbuchse nach wenigstens einem der vorhergehenden Ansprüche, dadurch gekennzeichnet, daß am freien Endbereich des ersten Teilstückes sich nach außen erstreckende Vorsprünge angeordnet sind, die mit entsprechenden Ausnehmungen und Vorsprüngen im Gehäuse bzw. in der die Öffnung des Gehäuses begrenzenden Wandung nach Art eines Bajonettverschlusses zusammenwirken.

## Claims

1. Bearing bush with sealing and/or guide and/or wiper rings or similar rings (11, 15) for a rod-shaped body (10) which is releasably arranged in an opening (14, 18, 20) provided for the passage of the rod-shaped body (10), in particular for the piston rod of a working cylinder, having the following features :

a) the bearing bush consists of a first section (5) of essentially cylindrical construction and of an adjoining second section (7) that widens outwards ;

b) the bearing bush consists, at least in the region forming the second section (7), of a resiliently deformable material ;

c) the bearing bush has holding means (4, 19, 3, 21) which are so constructed that they secure the bearing bush against axial displacement after insertion into the opening (14, 18, 20) of the housing (2) ;

characterized by the following features :

d) the second section (7) serves to receive the sealing and/or guide and/or wiper ring (11, 15) or a similar ring ;

e) the second section (7) has at least one slot (24) extending in the longitudinal direction of the bearing bush ;

f) the second section (7) is of conical construction ;

g) the smallest diameter of the second section (7) is larger than the diameter of the first section (5).

2. A bearing bush according to claim 1, characterized by the following features :

a) the first section (5) has at least one slot (23) extending in the longitudinal direction ;

b) at the free end of the first section (5) there is provided a radially outwardly extending projection (3, 21) which serves as holding means for the bearing bush in the opening of the housing.

3. A bearing bush according to at least one of the preceding claims, characterized by the following features :

a) the first section (5) has several longitudinally extending slots (23) which are so dimensioned that at least the free end region of the first section (5) is divided into resilient portions (4, 19) ;

b) the second section (7) has several longitudinally extending slots (24) which are so dimensioned that at least the free end region of the second section (7) is divided into resilient portions (9, 12).

4. A bearing bush according to at least one of the preceding claims, characterized in that in the region of the resilient portions (9, 12) on the inside of the second section (7) there is arranged a groove (8) for receiving sealing and/or guide and/or wiper rings or similar rings.

5. A bearing bush according to at least one of the preceding claims, characterized by the following features :

a) the projection (3, 21) arranged at the free end region of the first section (5) serves as first stop ;

b) a second stop is formed by an outwardly directed projection of the first section (5) constructed in the manner of a shoulder (16) and joining the first section (5) to the second section (7) ;

c) the first stop (3, 21) and the second stop (16) are arranged relative to one another such that on installation of the bearing bush in the opening of the housing they come to rest against the oppositely directed faces of steps provided in the housing.

6. A bearing bush according to at least one of the preceding claims, characterized in that the resilient portions (4, 19) of the first section (5) that are provided with the projections (3, 21) co-operate in the manner of a snap-fit connection with a step (20) of the opening of the housing receiving the bearing bush.

7. A bearing bush according to at least one of the preceding claims, characterized in that at the free end region of the first section there are arranged outwardly extending projections which co-operate in the manner of a bayonet fitting with corresponding recesses and projections in the housing and in wall defining the opening of the housing.

**Revendications**

1. Coussinet comportant des bagues d'étanchéité et/ou des barres de guidage et/ou des bagues racleuses ou des bagues analogues (11, 15) pour un corps en forme de tige (10) qui est disposé, de façon détachable, dans une ouverture (14, 18, 20) d'un carter (2) prévue pour le passage du corps en forme de tige (10), en particulier pour la tige de piston d'un cylindre de vérin, présentant les caractéristiques suivantes :

a) le coussinet est constitué d'une première partie (5) de forme essentiellement cylindrique et d'une seconde partie (7) qui s'y raccorde et va en s'élargissant ;

b) le coussinet est constitué, au moins dans la zone formant la seconde partie (7), d'un matériau élastiquement déformable ;

c) le coussinet présente des moyens d'arrêt (4, 19, 3, 21) qui sont conçus de façon à assurer la sécurité du coussinet à l'égard d'un coulissement axial après son introduction dans l'ouverture (14, 18, 20) du carter (2) ;

caractérisé par les caractéristiques suivantes :

d) la seconde partie (7) sert à recevoir la bague d'étanchéité et/ou la bague de guidage et/ou la bague racleuse (11, 15) ou une bague semblable ;

e) la seconde partie (7) présente au moins une fente (24) dirigée dans la direction longitudinale du coussinet ;

f) la seconde partie (7) a une forme conique ;

g) le plus petit diamètre de la seconde partie (7) est supérieur au diamètre de la première partie (5).

2. Coussinet selon la revendication 1, caractérisé par les caractéristiques suivantes :

a) la première partie (5) présente au moins une fente (23) dirigée dans la direction longitudinale ;

b) à l'extrémité libre de la première partie (5) est prévue une saillie (3, 21) qui s'étend radialement vers l'extérieur et qui sert de moyen d'arrêt pour le coussinet dans l'ouverture du carter.

3. Coussinet selon au moins l'une des revendications précédentes, caractérisé par les caractéristiques suivantes :

a) la première partie (5) présente plusieurs fentes (23) qui sont dirigées dans la direction longitudinale et sont dimensionnées de façon qu'au moins la zone d'extrémité libre de la première partie (5) soit divisée en portions élastiques (4, 19) ;

b) la seconde partie (7) présente plusieurs fentes (24) qui sont dirigées dans la direction longitudinale et qui sont dimensionnées de façon qu'au moins la zone d'extrémité libre de la seconde partie (7) soit divisée en portions élastiques (9, 12).

4. Coussinet selon au moins l'une des revendications précédentes, caractérisé par le moyen que, dans la zone des portions élastiques (9, 12), sur la face intérieure de la seconde partie (7), est prévue une rainure (8) pour recevoir des bagues d'étanchéité et/ou des bagues de guidage et/ou des bagues racleuses ou des bagues semblables.

5. Coussinet selon au moins l'une des revendications précédentes, caractérisé par les caractéristiques suivantes :

a) la saillie (3, 21) disposée dans la zone d'extrémité libre de la première partie (5) sert de première butée ;

b) une seconde butée est formée par une saillie de la première partie (5) qui relie la première partie (5) avec la seconde partie (7), qui a la forme d'un épaulement (16) et qui est dirigée vers l'extérieur ;

c) la première butée (3, 21) et la seconde butée (16) sont disposées l'une par rapport à l'autre de façon que, lors du montage du coussinet dans l'ouverture du carter, elles viennent en appui contre les surfaces, opposées l'une à l'autre, de gradins prévus dans le carter.

6. Coussinet selon au moins l'une des revendications précédentes, caractérisé en ce que les portions élastiques (4, 19) de la première partie (5) munies des saillies (3, 21) collaborent à la façon d'une liaison par déformation élastique, avec un gradin (20) de l'ouverture du carter qui reçoit le coussinet.

7. Coussinet selon au moins l'une des revendications précédentes, caractérisé en ce que dans la zone d'extrémité libre de la première partie sont disposées des saillies quih s'étendent vers l'extérieur et qui collaborent, à la façon d'une fermeture à baïonnette, avec des évidements et des saillies correspondants dans le carter ou dans la paroi qui limite l'ouverture du carter.

Fig. 1

Fig. 2

EP 0 208 839 B1